**Europäisches Patentamt**

**European Patent Office**

**Office européen des brevets**

(19)

(11) Numéro de publication: **0 230 159**
**B1**

(12) **FASCICULE DE BREVET EUROPEEN**

(45) Date de publication du fascicule du brevet:
08.02.89

(51) Int. Cl.⁴: **E 04 D 12/00**

(21) Numéro de dépôt: **86402447.6**

(22) Date de dépôt: **31.10.86**

(54) Support de liteaux, notamment pour couverture, machine pour sa fabrication et conditionnement pour un tel support.

(30) Priorité: **05.11.85 FR 8516369**

(43) Date de publication de la demande:
**29.07.87 Bulletin 87/31**

(45) Mention de la délivrance du brevet:
**08.02.89 Bulletin 89/6**

(84) Etats contractants désignés:
**AT BE CH DE GB IT LI NL SE**

(56) Documents cités:
**DE-B- 1 193 658**
**FR-A- 968 447**
**FR-A- 2 341 715**

(73) Titulaire: **SOCIETE MODERNE DU BATIMENT INDUSTRIEL société dite: SO MO BI, 11 rue Dieudonné Costes, F-93350 Le Bourget (FR)**

(72) Inventeur: **Ercole, Pierre, 21 Avenue Jean Jaures, F-93350 Le Bourget (FR)**

(74) Mandataire: **Hirsch, Marc-Roger, Cabinet Hirsch 34 rue de Bassano, F-75008 Paris (FR)**

ACTORUM AG

## Description

La présente invention se rapporte à un support de liteaux permettant le stockage de ceux-ci sous forme assemblée et destiné à permettre leur pose rapide à l'écartement désiré sur une surface de réception, telle que les chevrons d'une toiture, pour la fixation ultérieure d'éléments de couverture et consistant en une série de liteaux parallèles et régulièrement espacés fixés sur une face d'une feuille continue en un matériau souple. L'invention concerne également un conditionnement pour un tel support de liteaux ainsi qu'une machine pour la fabrication en continu du support de liteaux.

On a déjà proposé de tels supports (voir DE-B-1193658 et FR-A-2341715), des liteaux parallèles entre eux et régulièrement espacés étant agrafés par une de leurs faces longitudinales sur un support souple de liaison formé d'une feuille unique ou de plusieurs bandes disposées transversalement aux liteaux. Par «support de liteaux» on entend, dans la présente description et les revendications auxquelles elle donne lieu, l'ensemble formé par le support proprement dit et les liteaux qui y sont attachés.

La souplesse du support permet de l'enrouler en un rouleau compact. Lors de la couverture du toit, ce rouleau est déroulé le long des chevrons de la toiture, le support souple étant au contact de ces chevrons sur lesquels les liteaux sont agrafés ou cloués. Les tuiles et autres éléments de couverture sont alors accrochés à ces liteaux.

Cependant, si le support souple est une feuille de plastique, celle-ci constitue, par la suite, une barrière imperméable à la circulation de l'air sous la toiture et, à ce titre, favorise des phénomènes de condensation nuisibles à la conservation de la toiture et au confort de l'habitation. L'enlèvement du support souple s'avère en outre relativement difficile après la pose des liteaux.

Si le support souple est constitué par des rubans ou bandes, une autre difficulté surgit à la pose en raison de la capacité de déformation dans son plan de l'ensemble du support et des liteaux et, par ailleurs, on ne bénéficie plus de la protection provisoire contre les intempéries que constitue la feuille souple continue au cours de la pose des liteaux qui peuvent rester sans couverture définitive pendant plusieurs jours.

La présente invention a pour objet la réalisation d'un support de liteaux ne présentant pas ces inconvénients et qui soit, néanmoins, aisé à poser et assure, avec une meilleure précision encore, le positionnement des liteaux sur les chevrons de la toiture ou tout autre support susceptible de recevoir les liteaux assemblés.

A cet effet, dans le support de liteaux selon l'invention, les liteaux sont, en outre, reliés entre eux par des bandes parallèles minces, souples, résistantes et sensiblement inextensibles qui s'étendent transversalement à l'axe des liteaux et sont fixées à ceux-ci à leur intersection de manière que chaque liteau soit disposé entre la feuille et les bandes et puisse être isolé par la feuille de l'ambiance régnant de l'autre côté de la feuille, tout en permettant d'accéder librement aux liteaux du côté des bandes souples qui assurent la stabilité de l'écartement des liteaux du fait qu'elles sont réalisées en un matériau quasi inextensible et généralement plus épais que celui de la feuille souple. Le mode de réalisation de l'assemblage des liteaux selon l'invention permet d'utiliser des matériaux de qualités très différentes pour la feuille souple et pour les bandes inextensibles qui doivent assurer respectivement l'étanchéité provisoire ou supplémentaire aux intempéries et le maintien de l'écartement; le matériau destiné à assurer l'écartement est beaucoup plus cher par unité de surface que celui de la feuille mais est utilisé sur une surface plus réduite et est normalement attaché plus fermement aux liteaux que la feuille pour réaliser ainsi un assemblage moins onéreux, plus rigide et plus solide que ceux proposés précédemment. Les liteaux sont généralement fixés à la feuille et aux bandes par des agrafes engagées à force dans la matière du liteau et les agrafes de fixation des bandes sont plus résistantes et agrafées plus profondément que les agrafes de fixation de la feuille qui par contre sont disposées en plus grand nombre et selon un pas transversal plus faible sur les liteaux. La largeur de la feuille peut être supérieure à la largeur des liteaux pour ménager, au-delà de chaque extrémité de ceux-ci, une bande de recouvrement.

La feuille est avantageusement constituée d'un matériau propre à isoler provisoirement la surface de réception des intempéries et aisé à déchirer et/ou arracher après la fixation des liteaux sur leur surface de réception. Pour cela, la feuille peut être constituée par un film mince de matière plastique telle que du polyane qui est avantageusement recouvert au voisinage des rives dans une bande plus résistante fixée avec la feuille sur les liteaux. En variante, la feuille peut être munie de perforations en nombre, taille et répartition suffisants pour permettre une bonne respiration à travers la feuille et/ou éviter des condensations après la fixation sur la surface de réception. Les perforations présentent une section totale faible par rapport à la surface de la feuille et sont entourées chacune d'un rebord en saillie apte à repousser hors des perforations les liquides, par exemple l'eau de pluie, s'écoulant sur la feuille placée en recouvrement des liteaux.

Selon un autre aspect de l'invention, le conditionnement pour le support de liteaux qui vient d'être explicité est caractérisé en ce que les liteaux correspondant à une longueur de déploiement courante sont empilés axialement les uns sur les autres en repliant en accordéon leurs feuille et bandes intercalaires de liaison pour réaliser une forme de planche qui est cerclée énergiquement pour assurer son maintien en forme et s'opposer à la déformation des liteaux au stockage. En variante de ce mode de réalisation, les liteaux sont empilés axialement les uns sur les autres en repliant en accordéon leurs feuille et bandes intercalaires de liaison pour former une planche qui est cassée et repliée plusieurs fois sur elle-même pour réaliser une forme de poutre qui est cerclée énergiquement, au moins dans le sens transversal, pour assurer son maintien en forme et s'opposer à la déformation des liteaux au stockage.

L'invention a également pour objet la réalisation d'une machine permettant la fabrication en continu du support de liteaux qui vient d'être explicité. Cette machine comporte un magasin d'alimentation en liteaux, un convoyeur, des moyens pour amener successivement, selon une séquence répétée, chaque liteau du convoyeur à une position d'agrafage, au moins une agrafeuse disposée sur un axe vertical de part et d'autre des liteaux en position d'agrafage, une série de rouleaux de bandes minces, souples, résistantes et sensiblement inextensibles, guidées chacune par un galet vers la position d'agrafage, au-dessus du liteau occupant cette position, une bobine de fourniture d'une feuille plastique et des galets de guidage de cette feuille vers la position d'agrafage au-dessous du liteau occupant cette position, des crochets pilotés à course réglable assurant l'avance d'un pas du dernier liteau agrafé, de manière que le liteau amené du convoyeur soit placé à un pas du dernier liteau agrafé et que les bandes et la feuille soient distantes au niveau du liteau à agrafer d'un intervalle correspondant à l'épaisseur d'un liteau et enfin un touret motorisé sur lequel est enroulé le produit obtenu et qui assure le maintien sous tension du support de liteau agrafé hors de la zone d'agrafage. La machine peut comprendre, en outre, sur le trajet de la feuille, en amont de la position d'agrafage, un galet extracteur actionné par un vérin pour extraire pas à pas, et de façon centrée, une longueur de feuille égale à l'intervalle entre deux liteaux successifs, la feuille extraite passant ensuite dans un couloir de blocage entre une butée fixe et un poussoir et où elle est susceptible d'être bloquée pendant l'actionnement du galet par le vérin.

Selon un autre mode de réalisation de la machine pour fabriquer le support de liteau en continu, les moyens pour amener successivement chaque liteau en position d'agrafage consistent en un poussoir d'axe vertical actionné par un vérin pour faire passer successivement chaque liteau d'une position de butée axiale à la sortie du convoyeur à une position au niveau d'une table d'assemblage et en un poussoir d'axe horizontal actionné par un vérin pour pousser successivement chaque liteau au contact d'une butée escamotable en position d'agrafage.

D'autres buts, avantages et caractéristiques de l'invention apparaîtront à la lecture de la description d'un mode de réalisation du support de liteaux et de sa machine de fabrication, faite à titre non limitatif et en référence au dessin annexé dans lequel:

— la figure 1 est une vue partielle en perspective du support de liteaux selon l'invention;

— la figure 2 est une vue partielle en coupe transversale de ce même support;

— la figure 3 est une représentation schématique d'une machine destinée à la fabrication du support de liteaux selon l'invention.

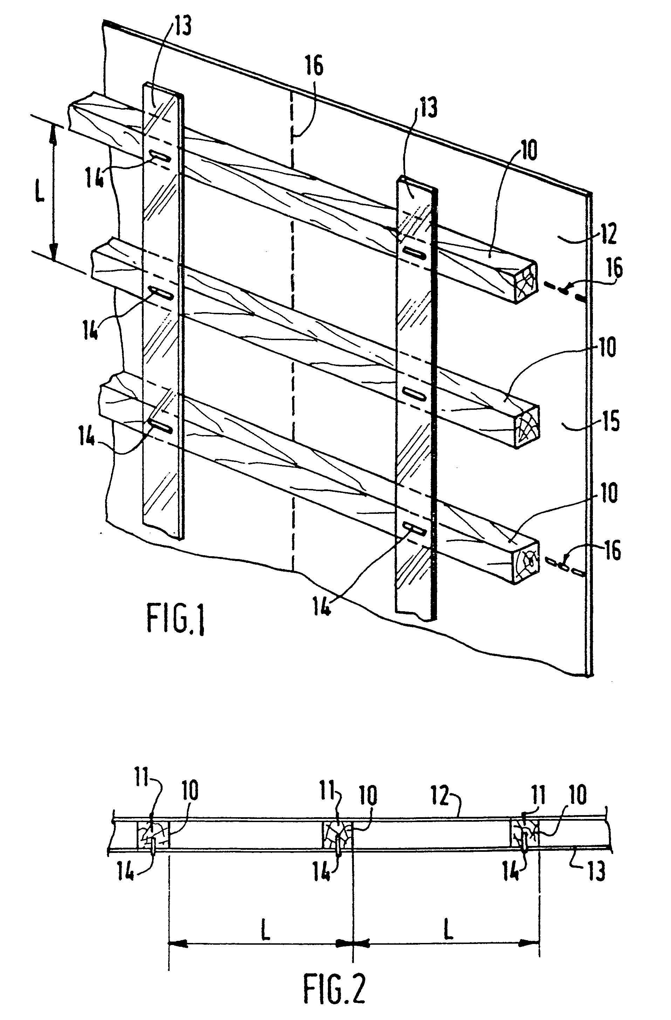

Dans la forme de réalisation choisie et représentée à la figure 1, le support de liteaux selon l'invention consiste en une série de liteaux 10, réalisés habituellement en bois brut de sciage, dans les dimensions courantes (notamment 27 × 27 mm) et si possible exempts de nœuds pour faciliter l'agrafage par engagement à force, dans le bois sec ou partiellement vert, d'agrafes en U de type courant. Les liteaux pourraient être réalisés en un autre matériau susceptible d'être cloué ou collé, notamment en matière plastique et/ou élastomère. Les liteaux sont disposés parallèles et équidistants les uns des autres et sont fixés, par exemple au moyen d'agrafes 11, sur une face d'une feuille 12 en un matériau souple, par exemple du polyéthylène ou du polyane et, selon l'invention, ils sont en outre reliés entre eux par des bandes 13 parallèles, minces, souples, résistantes et sensiblement inextensibles et équidistantes les unes des autres, s'étendant transversalement à l'axe des liteaux et fixées par des agrafes 14 à chacun de ceux-ci, de manière que chaque liteau 10 soit disposé entre la feuille 12 et les bandes 13. Les agrafes sont orientées de préférence parallèlement aux liteaux pour mieux supporter de petits désaxages de l'agrafage. Les bandes 13 étant beaucoup plus résistantes à l'arrachement que la feuille 12, on peut prévoir des agrafes 14 beaucoup plus résistantes et agrafées plus profondément que les agrafes 11 qui, par contre, peuvent être disposées en plus grand nombre (et selon un pas plus petit) sur les liteaux 10. Afin d'éviter l'arrachement de la feuille 12 réalisée en un film plastique mince et sur lequel peut s'exercer l'effet du vent ou le poids des outils de pose de la toiture, on peut ajouter sous les deux lignes des agrafes 11 les plus proches des rives une bande de plastique plus résistante qui est agrafée avec la feuille 12 et renforce celle-ci sur les bords.

Les bandes 13 assurent un espacement régulier des liteaux 10. Dans une forme de réalisation, les liteaux 10, qui présentent généralement une longueur comprise entre 1 et 5 m, sont fixés sur une feuille de polyéthylène, par exemple du polyane, et dont la largeur est légèrement supérieure à la longueur des liteaux 10 pour ménager, au-delà de chaque extrémité de ceux-ci, une bande de recouvrement 15 (figure 1) qui présente par exemple une largeur d'environ 5 cm pour permettre son rabattement sur l'extrémité des liteaux. Les bandes 13, qui présentent chacune une largeur d'environ 1 cm, sont agrafés sur les liteaux à chaque croisement avec l'un d'entre eux et sont, par exemple, réparties tous les demi-mètres à partir d'une distance de l'ordre de, par exemple, 0,20 m de l'extrémité des liteaux, de façon à réaliser un réseau s'opposant à l'extension de l'intervalle L entre les liteaux, mais permettant avant la pose de ceux-ci de les rapprocher jusqu'à être jointifs. Cette propriété du support de liteaux permet d'en réaliser un conditionnement original et pratiquement aussi compact qu'un paquet de liteaux bruts. Dans un tel conditionnement, les liteaux correspondant à une longueur de déploiement courante telle que celle d'un pan de toit de 5 à 10 m de large, après leur assemblage sur la feuille continue 12 avec les bandes parallèles de liaison inextensible 13, sont empilés axialement les uns sur les autres, en repliant en accordéon la feuille 12 et les bandes intercalaires de liaison 13, pour réaliser une forme de planche relativement plane qui est cerclée énergiquement pour assurer son maintien en forme et s'opposer à la déformation des liteaux au stockage. La feuille continue fait en général saillie d'un côté de la planche, et les bandes de l'autre côté de la planche, les deux pouvant cependant faire saillie du même côté de la planche pour que les bandes souples 13, plus résistantes que la feuille déchirable 12, protègent celle-ci des blessures que pourraient lui infliger les bandes de cerclage relativement rigides et coupantes.

En variante, la planche peut être cassée et repliée sur elle-même en plusieurs couches, pour réaliser une forme de poutre qui est également cerclée énergiquement pour assurer son maintien en forme et s'opposer à la déformation des liteaux au stockage ou au cours du séchage. Cette forme de réalisation convient mieux pour le stockage des supports de liteaux de grande longueur et offre une forme de stockage plus rigide.

L'ensemble constitué par la feuille 12, les liteaux 10 et les bandes 13 assure un positionnement très rigoureux et stable des liteaux entre eux quand il est disposé à plat et étiré. Selon un mode de conditionnement connu en soi et utilisé au cours de la production du support de liteaux, l'ensemble est commodément enroulé sous la forme d'un rouleau compact, facilement stockable et transportable, autour d'un axe parallèle à celui des liteaux 10. Lors de la pose, ce rouleau est déroulé le long des chevrons, selon la ligne de plus grande pente du toit, les bandes 13 étant au contact de ces chevrons. L'agrafage ou le clouage des liteaux sur les chevrons se fait à travers la feuille de plastique 12.

Avant que ne commence la pose des éléments de couverture (tuiles, ardoises, etc.), la feuille de plastique 12 assure une protection provisoire contre les intempéries. Pour obtenir une pose définitive des liteaux évitant des condensations parasites, il suffit d'arracher la feuille de plastique au moment de la pose de la couverture finale de la toiture telle que tuiles, ardoises, zinc, etc., des lignes perforées 16 pouvant être avantageusement prévues à cet effet, de place en place, le long de l'extrémité de certains liteaux 10 et, par exemple, entre les bandes résistantes 13.

Selon un autre mode de réalisation de l'assemblage des liteaux en vue d'assurer une bonne protection provisoire (et/ou complémentaire après la pose du bardage de la toiture) contre les intempéries, on prévoit sur la feuille 12 des perforations (réalisées par exemple par une pointe chauffée) dont la section totale est faible par rapport à la surface de la feuille et qui sont entourées chacune d'un rebord faisant saillie du côté de la feuille regardant vers l'extérieur et à l'opposé des liteaux. Après le déroulement des liteaux sur une toiture inclinée, la pluie même violente ne peut pénétrer que sous forme de suintements à travers les perforations et s'écoule rapidement par gravité. Les feuilles 12 munies de telles perforations à rebord peuvent être laissées en place après leur pose, notamment en cas de pose verticale car les perforations assurent la respiration à travers la feuille et évitent ainsi les condensations parasites tout en servant le cas échéant de recueille-gouttes à l'égard de fuites intempestives d'eau de pluie ou de condensation.

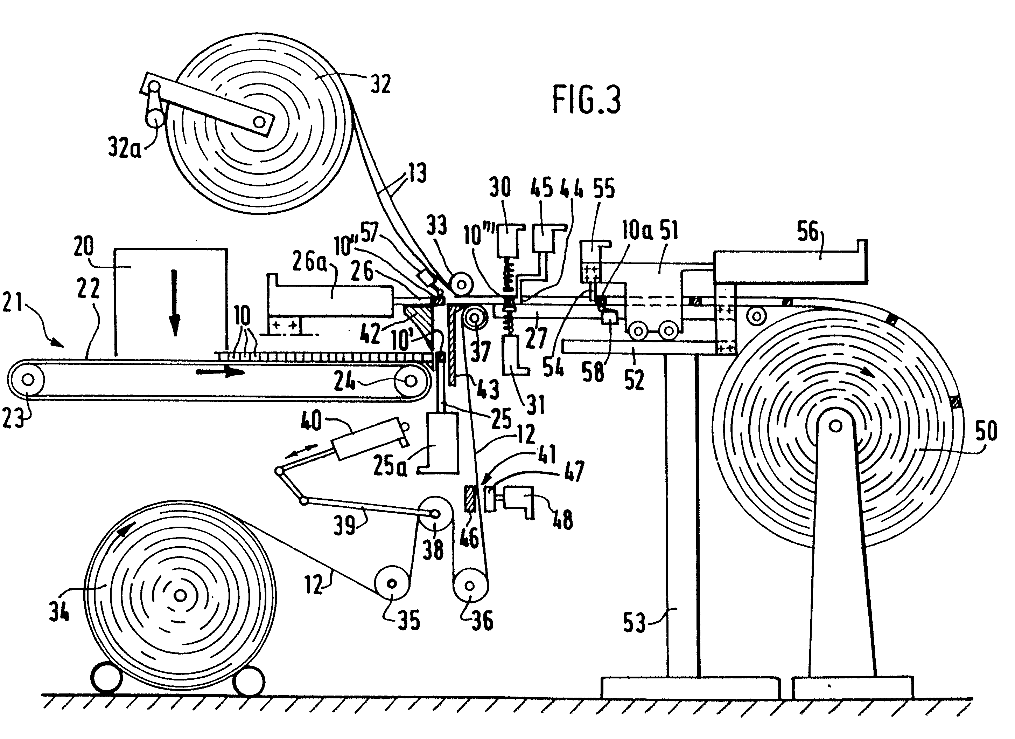

L'invention prévoit également une machine pour la fabrication du support de liteaux selon l'invention. Une forme de réalisation de cette machine est représentée à la figure 3 et comporte un poste d'alimentation en liteaux comprenant un magasin 20, un convoyeur 21 formé d'une courroie 22 tendue horizontalement entre deux rouleaux d'entraînement 23 et 24, et sur le brin supérieur de laquelle se rangent côte à côte les liteaux 10, parallèlement à l'axe des rouleaux. En l'absence du magasin 20, le brin supérieur de la courroie 22 peut être alimenté manuellement en liteaux 10 par la personne assurant la surveillance de la machine. Le poste d'alimentation est complété par deux poussoirs axiaux dont le premier est un poussoir 25 d'axe vertical, actionné par un vérin 25a, de préférence à air comprimé. On notera que la machine est équipée de vérins à commande électropneumatique fonctionnant en séquences successives liées, mais qu'en variante, les vérins pneumatiques peuvent être remplacés par des vérins hydrauliques ou électriques. Le poussoir 25 est adapté à faire passer successivement chaque liteau 10 d'une position 10' à la sortie du convoyeur 21 à une position 10" au niveau d'une table d'assemblage 27, le liteau 10 étant guidé entre des surfaces verticales de butée 42 et 43. Le deuxième poussoir 26 à axe horizontal est actionné par un vérin 26a, adapté à pousser horizontalement le liteau en cours de transfert de la position 10" à une position d'agrafage 10'''. Dans cette position 10''', le liteau est poussé énergiquement par le poussoir 26 en butée sur plusieurs butées escamotables 44, actionnées par au moins un vérin pneumatique 45, et qui viennent alors se loger dans le pas L entre le liteau agrafé 10a et le liteau à agrafer 10''' pour former butée d'avance et de pas pour ce dernier. Le vérin 45 permet de retirer les butées 44 du pas L après l'agrafage et d'autoriser l'avance du liteau agrafé 10''' vers la bobine d'enroulage 50.

La machine comporte, en outre, au moins une agrafeuse 30 disposée verticalement au-dessus de la position 10''' d'agrafage et une autre agrafeuse 31 disposée verticalement sous cette position, ces deux agrafeuses étant, par exemple, commandées à l'air comprimé par une électrovalve de séquence (non représentée) et adaptées à enfoncer des agrafes dans les faces supérieure et inférieure du liteau sur la longueur de celui-ci. Pour réaliser l'agrafage sur une face, on peut utiliser de façon classique une agrafeuse par point d'agrafage ou bien une agrafeuse unique à séquence qui se déplace sur un rail transversal de guidage pour réaliser successivement tous les agrafages d'un même liteau. L'agrafeuse inférieure 31 qui travaille sur la feuille plastique 12 relativement molle peut utiliser des agrafes 11 (cf. la figure 2) de plus petite taille, mais disposées en plus grand nombre et selon un plus petit pas sur la longueur des liteaux 10.

La machine comporte encore une série de bobines ou rouleaux 32 de bandes 13, chaque bande étant guidée grâce à un galet 33 vers la position d'agrafage 10''', au-dessus du liteau 10 occupant cette position, et les bobines étant, chacune, freinés par un sabot relevable 32a pour maintenir les bandes 13 dans un état de tension quasi constant.

La machine est, en outre, équipée d'un poste d'alimentation en feuille plastique 12 comprenant une bobine 34 sur laquelle est enroulée la feuille 12 et des galets de guidage 35, 36 et 37 de la feuille vers la position d'agrafage 10''' au-dessous du liteau occupant cette position. Les galets 33 sont disposés sensiblement au-dessus du galet 37 et sont distants de celui-ci d'un intervalle correspondant à l'épaisseur d'un liteau 10.

Le poste d'alimentation en feuille plastique 12 comprend, en outre, un galet extracteur 38 déplacé par une timonerie 39 actionnée par un vérin 40 et qui est adaptée à extraire, pas à pas, de la bobine 34 des longueurs de feuille correspondant à l'intervalle L entre deux liteaux 10 successifs, de manière à éviter la mise en biais de la feuille plastique 12. Après extraction de la bobine 34, la feuille plastique 12 passe en outre, en aval du galet 38, dans un couloir de blocage 41, entre une butée fixe 46 et un poussoir 47 actionné par un vérin 48 à double effet ou à rappel par ressort. On comprend que, lorsque la feuille 12 est bloquée dans le couloir 41, le déplacement du galet 38 vers le haut de la figure fait dérouler de la bobine 34 une longueur de feuille correspondant à l'intervalle L et qui peut être libérée par déblocage du couloir 41 et descente du galet 38.

Par l'action des agrafeuses pneumatiques 30 et 31, les liteaux 10 amenés successivement en 10''' sont agrafés aux bandes 13 et à la feuille 12 pour constituer le support selon l'invention, lequel support est enroulé sur un touret motorisé 50 qui, par sa rotation, assure en outre la tension des bandes 13 et de la feuille 12. Lorsque le liteau 10''' est agrafé, les butées 44 s'effacent et on utilise, pour le faire avancer d'un pas L, un chariot 51 guidé axialement au-delà des liteaux 10 sur des rails latéraux 52 solidaires du châssis ou bâti 53 de la machine. Le chariot 51 porte des butées escamotables 54 actionnées par au moins un vérin 55. Après l'agrafage du liteau 10''', le chariot 51 est poussé axialement par un vérin 56 en appui sur le châssis 53, en direction du liteau 10''' qui vient d'être agrafé. Les butées 54 sont alors effacées par une commande électropneumatique séquentielle et viennent se placer en avant du dernier liteau 10'''. Les butées 54 sont ensuite abaissées devant le liteau agrafé 10''' dans la même position que celle représentée pour le liteau 10a sur la figure 3. La suite de la commande séquentielle fait effacer les butées 44 et actionne le vérin 56 qui rappelle le chariot 51 dans la position représentée sur la figure, pour repousser les liteaux agrafés d'un pas vers la droite de la figure. La course du vérin 56 qui correspond à un pas ou intervalle L entre liteaux est, bien entendu, réglable pour s'adapter à divers intervalles. Le chariot 51 porte latéralement des organes de butée des liteaux pour éviter à ceux-ci de se placer en biais au cours de leur avance en direction du touret motorisé 50.

Chacune des positions successives du liteau en cours de traitement est repérée par des contacteurs de confirmation tels que le contacteur 57 de repérage de la position 10'' et l'actionnement des contacteurs déclenche la phase suivante des séquences électropneumatiques d'actionnement qui vont maintenant être explicitées plus en détail pour illustrer le fonctionnement de la machine.

L'agrafage simultané des bandes 13 et de la feuille 12 sur un liteau 10 occupant la position 10''' assure la liaison de la feuille 12, des bandes 13 et du liteau ainsi agrafé. La feuille 12 qui était alors bloquée dans le couloir 41 est alors libérée par le vérin 48 pour la phase d'avance suivante.

Le vérin 40 actionne, en même temps, le galet extracteur 38 qui libère une longueur de feuille 12 correspondant à un pas ou intervalle L. Le chariot 51 avance comme décrit précédemment pour saisir le dernier liteau agrafé 10''' et le transporter en 10a, tandis que le touret 50 enroule le pas du support ainsi avancé. Dès que le contacteur 58 de fin de course de rappel du vérin 56 est actionné, la feuille 12 est à nouveau bloquée dans le couloir 41 par le vérin 48 et le vérin 40 fait remonter le galet 38 qui tire de la bobine 34 un pas L de la feuille 12. La traction du touret 50 fait tendre de nouveau la feuille 12 et les bandes 13, les faisant avancer d'un intervalle L, prêtes à recevoir, en sandwich entre elles, un nouveau liteau 10 prélevé sur la courroie 22 et amené par les poussoirs 25 et 26 en position 10'''. L'agrafage a alors lieu et le cycle se répète ainsi liteau par liteau.

Comme on l'a déjà indiqué, le produit obtenu peut être constitué par des liteaux en un matériau autre que le bois, par exemple en matière plastique. Dans ce cas, les liteaux peuvent ne pas être agrafés ou cloués, mais fixés aux chevrons par collage, rivetage, vissage ou autre moyen approprié.

Le produit selon l'invention et constitué de liteaux espacés régulièrement et disposés en sandwich entre, d'un côté, une feuille continue souple (éventuellement perforée et/ou prédécoupée) et, de l'autre, des bandes résistantes souples et inextensibles, peut être utilisé pour la réalisation des toitures, auquel cas la feuille continue 12 est déchirée et/ou arrachée après la pose de la couverture (tuiles, ardoises, etc.) pour éviter les condensations.

Bien d'autres usages peuvent être envisagés pour le produit selon l'invention et dans lesquels la feuille de plastique continue n'est, en général, pas arrachée: notamment pour le revêtement des serres et la réalisation de volets d'aération réglables et/ou repliables dans ces serres, pour réaliser des couvertures d'abris ou de garages, d'auvents, de vérandas, pour réaliser des cloisons de soutien de couches de liant ou de matière de recouvrement décoratif tel que du plâtre ou du tissu en paroi verticale ou en cloison, pour protéger des cultures ou des surfaces de jeux ou de jardin et également comme clôture partiellement souple et étanche à la fois aux regards à l'aide de liteaux quasiment jointifs et au passage des petits animaux ou de la végétation en utilisant une feuille souple relativement résistante.

Dans un autre type d'usage, notamment pour la couverture de parois verticales, le support de liteaux peut être constitué d'une feuille continue, perforée ou non, fixée sur une face des liteaux et d'une série de bandes parallèles souples et inextensibles fixées sur la même face des liteaux, en général au-dessus de la feuille pour mieux la maintenir, ou bien alternativement au contact de la feuille continue 12 entre les liteaux qu'elle entoure chacun sur trois faces.

Pour l'utilisation du produit selon l'invention à titre d'isolant thermique et/ou phonique et/ou contre des rayonnements, on peut envisager de recouvrir la feuille continue 12 d'une couche d'isolant thermique et/ou phonique et/ou contre des rayonnements ou bien de poser, du côté des bandes inextensibles souples 13, une deuxième couche de feuille 12 et d'emprisonner ainsi une lame d'air entre les deux feuilles 12 et entre les liteaux parallèles espacés du pas L.

En variante, les liteaux assemblés selon l'invention peuvent servir d'armature à une couche d'isolation et d'étanchéité constituée par exemple du côté des bandes souples 13 d'une toile de doublure d'effet esthétique, les différentes couches étant assemblées aux liteaux 10 et/ou à la feuille continue 12 et aux bandes souples 13 par tout moyen adéquat tel que : agrafage, thermosoudure, couture, collage, etc.

## Revendications

1. Support de liteaux permettant le stockage de ceux-ci sous forme d'assemblage, destiné à permettre leur pose rapide à l'écartement désiré sur une surface de réception telle que les chevrons d'une toiture pour la fixation ultérieure d'éléments de couverture et consistant en une série de liteaux, parallèles et régulièrement espacés, fixés sur une face d'une feuille continue en un matériau souple, caractérisé en ce que les liteaux (10) sont, en outre, reliés entre eux par des bandes (13) parallèles, minces, souples, résistantes et sensiblement inextensibles qui s'étendent transversalement à l'axe des liteaux (10) et sont fixées à ceux-ci à leur intersection (en 14) avec ceux-ci, de manière que chaque liteau (10) soit disposé entre la feuille (12) et les bandes (13) et isolé par la feuille (12) de l'ambiance régnant de l'autre côté de la feuille.

2. Support selon la revendication 1, caractérisé en ce que les liteaux (10) sont fixés à la feuille (12) et aux bandes (13) par des agrafes (11,14) engagées à force dans la matière du liteau et que les agrafes (14) des bandes (13) sont plus résistantes et agrafées plus profondément que les agrafes (11) de fixation de la feuille (12) qui sont par contre disposées en plus grand nombre et selon un pas transversal plus faible sur les liteaux (10).

3. Support selon l'une des revendications 1 et 2, caractérisé en ce que la largeur de la feuille (12) est supérieure à la longueur des liteaux (10) pour ménager, au-delà de chaque extrémité de ceux-ci, une bande de recouvrement (15).

4. Support de liteaux selon l'une des revendications 1 à 3, caractérisé en ce que la feuille (12) est constituée en un matériau propre à isoler provisoirement la surface de réception des intempéries et aisée à déchirer et/ou à arracher après fixation des liteaux sur leur surface de réception.

5. Support de liteaux selon l'une des revendications 1 à 4, caractérisé en ce que la feuille (12) est constituée par un film mince de matière plastique telle que du polyane.

6. Support de liteaux selon l'une des revendications 1 à 5, caractérisé en ce que la feuille (12) est recouverte au voisinage de ses rives d'une bande plus résistante fixée avec la feuille (12) sur les liteaux (10).

7. Support de liteaux selon l'une des revendications 1 à 6, caractérisé en ce que la feuille (12) est munie de perforations en nombre, taille et répartition suffisants pour permettre une bonne respiration à travers la feuille et/ou éviter des condensations après la fixation sur la surface de réception.

8. Support de liteaux selon la revendication 7 caractérisé en ce que les perforations présentent une section totale faible par rapport à la surface de la feuille et sont entourées chacune d'un rebord en saillie apte à repousser hors de la perforation les liquides, par exemple l'eau de pluie, s'écoulant sur la feuille (12) placée en recouvrement des liteaux (10).

9. Conditionnement pour un support de liteaux selon l'une des revendications 1 à 8, caractérisé en ce que les liteaux correspondant à une longueur de déploiement courante sont empilés axialement les uns sur les autres en repliant en accordéon leur feuille et bandes intercalaires de liaison pour réaliser une forme de planche qui est cerclée énergiquement pour assurer son maintien en forme et s'opposer à la déformation des liteaux au stockage.

10. Conditionnement pour un support de liteaux selon l'une des revendications 1 à 8, caractérisé en ce que les liteaux sont empilés axialement les uns sur les autres en repliant en accordéon leur feuille et bandes intercalaires de liaison pour former une planche qui est cassée et repliée plusieurs fois sur elle-même pour réaliser une forme de poutre qui est cerclée énergiquement, au moins dans le sens transversal, pour assurer son maintien en forme et s'opposer à la déformation des liteaux au stockage.

11. Machine pour la fabrication en continu du support de liteaux selon l'une des revendications 1 à 8, caractérisée en ce qu'elle comporte un magasin (20) d'alimentation en liteaux (10), un convoyeur (21), des moyens (25, 26) pour amener successivement, selon une séquence répétée, chaque liteau (10) du convoyeur (21) à une position d'agrafage (10'''), au moins une agrafeuse (30, 31) disposée sur un axe vertical de part et d'autre des liteaux en position d'agrafage (10'''), une série de rouleaux (32) de bandes minces, souples, résistantes et sensiblement inextensibles (13), guidées chacune par un galet (33) vers la position d'agrafage (10''') au-dessus du liteau occupant cette position, une bobine (34) de fourniture d'une feuille plastique (12) et des galets de guidage (35, 36, 37) de cette feuille vers la position d'agrafage (10''') au-dessous du liteau (10) occupant cette position, des crochets pilotés à course réglable (54) assurant l'avance d'un pas (L) du dernier liteau agrafé, de manière que le liteau (10) amené du convoyeur (21) soit placé à un pas (L) du dernier liteau agrafé et que les bandes (13) et la feuille (12) soient distantes au niveau du liteau à agrafer d'un intervalle correspondant à l'épaisseur d'un liteau (10) et, enfin, un touret motorisé (50) sur lequel est enroulé le produit obtenu et qui assure le maintien sous tension du support de liteaux agrafé hors de la zone d'agrafage.

12. Machine selon la revendication 11, caractérisée en ce qu'elle comprend, en outre, sur le trajet de la feuille (12), en amont de la position d'agrafage, un galet extracteur (38) actionné par un vérin (40) pour extraire, pas à pas et de façon centrée, une longueur de feuille égale à l'intervalle (L) entre deux liteaux (10) successifs, la feuille extraite (12) passant ensuite dans un couloir de blocage (41) entre une butée fixe (46) et un poussoir (47) et où elle est susceptible d'être bloquée pendant l'actionnement du galet (38) par le vérin (40).

13. Machine selon l'une des revendications 11 et 12, caractérisée en ce que les moyens (25, 26) pour amener successivement chaque liteau (10) en position d'agrafage (10''') consistent en un poussoir (25) à axe vertical, actionné par un vérin (25a) pour faire passer successivement chaque liteau (10) d'une position (10') de butée axiale à la sortie du convoyeur (21) à une position (10''') au niveau d'une table d'assemblage (27), et en un poussoir (26) d'axe horizontal actionné par un vérin (26a) pour pousser successivement chaque liteau (10) au contact d'une butée escamotable (44) en position d'agrafage (10''').

## Patentansprüche

1. Dachlattenträger zum Einlagern von miteinander verbundenen Dachlatten, die dazu bestimmt sind, schnell mit dem gewünschten gegenseitigen Abstand auf eine Auflagefläche, wie Dachsparren einer Dachstruktur zwecks späterer Anbringung von Deckelementen aufgebracht zu werden, bestehend aus einer Mehrzahl von parallel und in gleichen Abständen angeordneten und auf einer durchgehenden flexiblen Folie angebrachten Dachlatten, dadurch gekennzeichnet, dass die Dachlatten (10) ferner durch parallele, dünne, flexible, widerstandsfähige und wesentlich nicht dehnbare Bänder (13) miteinander verbunden sind, die sich quer zur Achse der Dachlatten (10) erstrecken und an denselben an den Schnittpunkten (bei 14) zwischen den Latten und den Bändern befestigt sind, derart, dass jede Dachlatte (10) zwischen der Folie (12) und den Bändern (13) angeordnet und durch die Folie (12) von der Umgebung jenseits der Folie getrennt ist.

2. Dachlattenträger nach Anspruch 1, dadurch gekennzeichnet, dass die Dachlatten (10) an der Folie (12) und an den Bändern (13) vermittels in das Dachlattenmaterial eingedrückter Klammern (11, 14) befestigt sind, und dass die Klammern (14) für die Bänder (13) widerstandsfähiger und tiefer eingedrückt sind als die zur Befestigung der Folie (12) dienenden Klammern (11), deren Anzahl hingegen grösser ist und die mit geringeren Abständen an den Dachlatten (10) angebracht sind.

3. Dachlattenträger nach den Ansprüchen 1 und 2, dadurch gekennzeichnet, dass die Breite der Folie (12) grösser ist als die Länge der Dachlatten (10), derart, dass an jedem Ende der letzteren ein Deckstreifen (15) gebildet ist.

4. Dachlattenträger nach einem der Ansprüche 1 bis 3, dadurch gekennzeichnet, dass die Folie (12) aus einem Material besteht, das zeitweilig die Auflagefläche gegen Witterungseinflüsse schützen kann und das nach dem Anbringen der Dachlatten auf die Auflagefäche leicht zerreissbar, bzw. abreissbar ist.

5. Dachlattenträger nach einem der Ansprüche 1 bis 4, dadurch gekennzeichnet, dass die Folie (12) aus einem dünnen Kunststoff-Film, wie Polyanfilm besteht.

6. Dachlattenträger nach einem der Ansprüche 1 bis 5, dadurch gekennzeichnet, dass die Folie (12) in Nähe ihrer Ränder mit einem mit der Folie zusammen an den Dachlatten (10) befestigten, widerstanfsfähigeren Band abgedeckt ist.

7. Dachlattenträger nach einem der Ansprüche 1 bis 6, dadurch gekennzeichnet, dass die Folie (12) mit Lochungen versehen ist, deren Anzahl und Verteilung derart gewählt sind, dass sie eine befriedigende Belüftung durch die Folie hindurch gewährleisten, bzw. eine Kondensation nach der Anbringung auf der Auflagefläche verhindern.

8. Dachlattenträger nach Anspruch 7, dadurch gekennzeichnet, dass die Lochungen einen in Bezug die Oberfläche der Folie geringen Gesamtquerschnitt besitzen, und dass die Lochungen ferner mit einem überstehenden Rand versehen sind, der dazu geeignet ist, über die Dachlatten (10) abdeckende Folie (12) fliessende Flüssigkeiten wie Regenwasser aus der Lochung zu vertreiben.

9. Konditionierung eines Dachlattenträgers nach einem der Ansprüche 1 bis 8, dadurch gekennzeichnet, dass die einer normalen Auslegelänge entsprechenden Dachlatten axial aufeinander gestapelt sind und die Folie sowie die Zwischenbänder akkordeonförmig gefaltet werden, derart dass ein brettförmiges Gebilde entsteht, das fest umschlungen wird, um seine Form beibehalten zu können und einer Verformung der Dachlatten während deren Einlagerung entgegenzuwirken.

10. Konditionierung eines Dachlattenträgers nach einem der Ansprüche 1 bis 8, dadurch gekennzeichnet, dass die Dachlatten axial aufeinandergestapelt sind, wobei die Folie und die Zwischenbänder akkordeonförmig gefaltet sind, um ein Brett zu bilden, das mehrmals gebrochen und zurückgefaltet ist, so dass ein balkenförmiges Gebilde entsteht, welches zumindest in Querrichtung fest umschlungen wird, um seine Form beibehalten zu können und einer Verformung der Dachlatten während deren Einlagerung entgegenzuwirken.

11. Maschine zur ununterbrochenen Herstellung des Dachlattenträgers nach einem der Ansprüche 1 bis 8, dadurch gekennzeichnet, dass sie ein Dachlattenzufuhrmagazin (20), ein Förderband (21) und Mittel (25, 26) aufweist, um nacheinander gemäss einer wiederholten Sequenz die jeweiligen Dachlatten (10) vom Förderband (21) in eine Klammerstation (10''') bringen, ferner wenigstens eine Klammervorrichtung (30, 31), die auf einer vertikalen Achse beiderseits der an der Klammerstation (10''') befindliche Dachlatten angeordnet ist, sowie eine Mehrzahl von dünnen, flexiblen, widerstandsfähigen, nicht dehnbaren Bändern (13), die durch je eine Rolle (33) zur Klammerstation (10''') geführt werden, derart, dass sie sich oberhalb der dort vorhandenen Dachlatte befinden, eine Spule (34) zur Abgabe einer Kunststoffolie (12) und Führungsrollen (35, 36, 37), die die Folie zur Klammerstation (10''') leiten, derart, dass sie unterhalb der dort vorhandenen Dachlatte (10) befindlich ist, ferner gesteuerte Haken (54), die schrittweise bewegt werden, um jeweils die zuletzt geklammerte Dachlatte um eine Vorschubshublänge (L) zu fördern, derart, dass die vom Förderband (21) herangeführte Dachlatte (10) um eine Vorschubhublänge (L) von der zuletzt geklammerten Dachlatte entfernt ist und dass die Bänder (13) und die Folie (12) im Bereich der zu klammernden Dachlatte um die Dicke einer Dachlatte (10) voneinander entfernt sind, wobei ferner eine motorisch angetriebene Aufspulrolle (50) vorgesehen ist, auf der das erhaltene Erzeugnis aufgespult wird und die den Dachlattenträger ausserhalb der Klammerzone spannt.

12. Maschine nach Anspruch 11, dadurch gekennzeichnet, dass sie ferner auf dem Förderweg der Folie (12) vor der Klammerstation eine durch einen Drucktopf (40) betätigte Abziehrolle (38) umfasst, die zentrisch und schrittweise Folienabschnitte abzieht, deren Länge dem Zwischenraum (L) zwischen zwei aufeinanderfolgenden Dachlatten (10) entspricht, wobei die abgezogene Folie (12) sodann in einen Sperrdurchlass (41) zwischen einem feststehenden Anschlag (46) und einem Stössel (47) geführt wird, in welchem sie während der durch den Drucktopf (40) erfolgenden Betätigung der Rolle (38) blockierbar ist.

13. Maschine nach Anspruch 11 oder 12, dadurch gekennzeichnet, dass die Mittel (25, 26), die die Dachlatten (10) nacheinander an die Klammerstation (10''') bringen, einen durch einen Drucktopf (25a) angetriebenen Stössel (25) mit vertikaler Achse umfassen, derart, dass die Dachlatten (10) nacheinander von einer Anschlagstellung (10') am Ausgang des Förderbands (21) aus in eine Stellung (10''') in der Höhe des Montagetisches (27) gebracht werden, sowie einen durch einen Drucktopf (26a) angetriebenen Stössel (26) mit horizontaler Achse, um die Dachlatten (10) nacheinander mit an der Klammerstation (10''')

mit einem einziehbaren Anschlag (44) in Berührung zu bringen.

## Claims

1. Support for battens allowing the latter to be stored in an assembled condition, adapted to allow said battens to be rapidly mounted in place with the desired spacing on a receiving surface such as a surface defined by the rafters of a roof structure with a view to fixing afterwards covering elements, consisting of a plurality of battens that are arranged parallelly and regularly spaced, said battens being affixed to one face of a continuous foil of flexible material, characterized in that said battens are furthermore interconnected by parallel, thin, flexible resistant and substantially inextensible ribbons (13) extending transversely with respect to the axis of said battens (10) and fixed to said battens at their intersection therewith (at 14), so that every batten (10) is placed between said foil (12) and said ribbons (13) and is isolated by said foil (12) with respect to the environment prevailing at the opposite side of said foil.

2. Support for battens according to claim 1, characterized in that said battens (10) are fixed to said foil and to said ribbons (13) by clamps (11, 14) forcibly driven into the material of the battens, and in that the clamps (14) associated to said ribbons (13) are stronger and implanted at a greater depth than the clamps (11) associated to said foil, which latter clamps are provided in a greater number and disposed according to a smaller transversal pitch on said battens.

3. Support for battens according to any of claims 1 and 2, characterized in that the width of said foil (12) is greater than the length of said battens (10), so as to provide beyond each end of said battens a covering band (15).

4. Support for battens according to any of claims 1 to 3, characterized in that said foil (12) is constituted by a material adapted provisionally to isolate the receiving surface with respect to weather inclemency and adapted to be easily torn up or torn off after fixing of said battens onto said receiving surface.

5. Support for battens according to any of claims 1 to 4, characterized in that said foil (12) is constituted by a thin film of plastic material such as polyane.

6. Support for battens according to any of claims 1 to 5, characterized in that said foil (12) is covered in the vicinity of its edges by a stronger band fixed together with said foil (12) onto said battens (10).

7. Support for battens according to any of claims 1 to 6, characterized in that said foil (12) comprises perforations the number, size and distribution of which are selected to be sufficient for allowing a satisfactory «respiration» through said foil and/or to avoid condensation after affixing onto said receiving surface.

8. Support for battens according to claim 7, characterized in that said perforations have a total cross-sectional area which is small with respect to the surface of said foil, said perforations being provided each with a protruding rim adapted to repel liquids such as rain water flowing over said foil (12) which recovers said battens (10).

9. Packing arrangement for a support for battens according to any of claims 1 to 8, characterized in that the battens corresponding to a normal unfolding length are stacked axially while the associated foil and interposed connecting ribbons are folded in a bellow-like manner so as to constitute a plate-shaped structure which is tightly encircled with a view to preserving its configuration and to resist deformation of said battens during storage.

10. Packing arrangement for a support or battens according to any of claims 1 to 8, characterized in that said battens are axially stacked onto each other while said foil and the interposed connecting ribbons are folded in a bellow-like manner so as to form a plate which is broken and folded over several times so as to constitute a beam that is firmly encircled at least in the transverse direction with a view to retaining its shape and to resisting deformation of said battens during storage.

11. Machine for continuously manufacturing the support for battens according to any of claims 1 to 8, characterized in that it comprises a batten feeding magazine (20), a conveyor (21), means (25, 26) for transferring successively and according to a repeated sequence the battens (10) from said conveyor (21) to a clamping station (10'''), at least one clamping apparatus (30, 31) disposed on a vertical axis on either side of the battens at the clamping station (10'''), a series of spools (32) of thin, flexible, strong and substantially inextensible ribbons (13) each one of which is guided by a roller (33) toward said clamping station (10''') above the batten that is present at said station, a spool (34) for feeding a plastic foil (12) and guiding rollers (35, 36, 37) for guiding said foil towards said clamping station (10'''), below the batten (10) that is present at said station, monitored hooks (54) actuated according to an adjustable stroke length so as to displace over the length of one step (L) the last batten that has been clamped, in such a manner that the batten (10) advanced by said conveyor (21) is located at a distance equivalent to one step (L) from the batten (13) and said foil (12) are separated, at the level of the batten to be clamped, by a distance corresponding to the thickness of a batten (10), said machine further comprising a motor-actuated spool (50) on which the finished produce is wound up and which permanently tensions the assembly of clamped battens and their support outside of the clamping zone.

12. Machine according to claim 11, characterized in that it further comprises on the travelling path of said foil (12) upstream from said clamping station an extraction roller (38) acutated by a jack (40) and adapted to extract stepwise and in a centered fashion a length of said foil which corresponds to the interval (L) between two successive battens (10), the thus extracted foil (12) then passing though a blocking passage (41) between a fixed abutment member (46) and a pusher member (47), in which passage said foil is adapted to be blocked during the actuation of the roller (38) by said jack (40).

13. Machine according to any of claims 11 and 12, characterized in that said means (25, 26) for transferring successively said battens (10) towards said clamping station (10''') comprise a pushing member (25) having a vertical axis and actuated by a jack (25a) for transferring successively said battens (10) from one position (10') wherein they are axially abutting at the outlet end of said conveyor (21) towards a position (10''') at the level of an assembling table (27), and a pushing member (26) having a horizontal axis and actuated by a jack (26a) for successively pushing said battens (10) into engagement with a retractable abutment member (44) at the clamping station (10''').

FIG.1

FIG.2

FIG.3